# EUROPÄISCHE PATENTSCHRIFT

(11) **EP 1 768 313 B1**
(45) Veröffentlichungstag und Bekanntmachung des Hinweises auf die Patenterteilung: **06.03.2013**
(21) Anmeldenummer: 05021749.6
(22) Anmeldetag: 06.10.2005
(51) Int. Cl.: H04W 88/06

(54) **Konvertereinheit und Verfahren zum Steuern der Kommunikation in einem drahtlosen Kommunikationsnetzwerk**
Converter unit and method for controlling communication in a wireless communication network
Unité de conversion et procédé de contrôle de communication dans un réseau de communication sans fil

(30) Priorität: 21.09.2005 EP 05020561
(43) Veröffentlichungstag der Anmeldung: 28.03.2007
(73) Patentinhaber: Nokia Siemens Networks GmbH & Co. KG, 81541 München (DE)
(72) Erfinder: Köster, Gerta, Dr., 81543 München (DE); Peter, Hans-Jürgen, 81379 München (DE)

(56) Entgegenhaltungen:
- WO-A-2004/012374
- WO-A-2004/025928
- US-A1- 2004 181 602
- US-B1- 6 584 080
- FORSCHUNGSZENTRUM TELEKOMMUNIKATION WIEN, CHRISTOPH F. MECKELENBRÄUKER: "UMTS, WLAN und WIMAX - Zwei gegen einen?" TELEKOM TAG 2005, KOMPETENZZENTREN-PROGRAM KPLUS, [Online] 29. Juni 2005 (2005-06-29), Seiten 1-25, XP002413646 Gefunden im Internet: URL:http://userver.ftw.at/telekomtag05/UMT S-WLAN-WIMAX.pdf> [gefunden am 2007-01-08]
- BURROWS K. AND FIELBRANDT L.: "Wimax" WHITE PAPER - OVERCOMING THE LIMITATIONS OF FIXED WIRED ACCESS TECHNOLOGIES, [Online] März 2004 (2004-03), Seiten 1-9, XP002413647 Gefunden im Internet: URL:http://www.siemens.com/Daten/siecom/HQ /IC/Internet/Marketing/WORKAREA/dsenf_re/t emplatedata/English/document/binary/WiMAX2 0whitepaper20March202004_1161666.pdf> [gefunden am 2007-01-08]

## Beschreibung

Die vorliegende Erfindung betrifft eine Konvertereinheit zum Einsatz in drahtlosen Accessnetzen, insbesondere Digital Subscriber Line (DSL) Accessnetzen. Ausserdem betrifft die Erfindung ein Verfahren zum Steuern der Kommunikation in drahtlosen Accessnetzen sowie ein Telekommunikationsnetzwerk mit der vorangehenden Konvertereinheit. Das Telekommunikationsnetzwerk wird dabei im allgemeinsten Sinne als Netzwerk zum Übertragen von Daten verstanden.

Digital Subscriber Line Accessnetze sind als drahtgebundene Accessnetze realisiert, die beispielsweise über zwei Drahtleitungen von einem DSL Accessknoten mit einem Teilnehmer-Endgerät ("customer premises equipment" = CPE) verbunden sind. Für derartige drahtgebundene DSL Accessnetze ergibt sich aufgrund der physikalischen Randbedingungen eine limitierte Reichweite von ca. 5 km und eine begrenzte Übertragungskapazität. Mit Hilfe drahtloser ("wireless") Funkübertragungstechnik ist eine Erhöhung der Übertragungsreichweite von derartigen DSL Accessnetzen bei gleichzeitiger Erhöhung der Übertragungskapazität möglich. Derzeit sind jedoch nur proprietäre Funkübertragungslösungen bekannt bzw. praktisch realisiert, die jeweils hohe Investitionskosten für die Anschaffung von zugehörigen Teilnehmer-Endgeräten (CPE) hervorrufen.

Um den Wildwuchs derartiger proprietärer Funkübertragungslösungen zu unterbinden, ist durch das Standardisierungsgremium IEEE ein neuer Standard unter der Kurzbezeichnung 802.16 verabschiedet worden, der eine kostengünstige Realisierung für drahtlose DSL Accessnetze beinhaltet. Die erwarteten Übertragungsreichweiten gemäß dem Standard 802.16 realisierten Luftschnittstellen dürften unter Freiraumbedingungen mit gleichzeitig hoher - eventuell sogar maximaler - Übertragungsrate im Mittel bei etwa 10 km oder auch darüber liegen. Zur Erzielung derart hoher Übertragungsreichweiten ist die Anordnung der Teilnehmerendgeräte (CPE) in der direkten Sichtlinie erforderlich. Die besten Ergebnisse lassen sich somit durch die Anordnung einer CPE zugeordneten Antenne außerhalb, d.h. an der Außenwand oder auch im Fensterbereich innerhalb von Gebäuden erzielen. Dagegen ist im sonstigen Innenbereich von Gebäuden bei einer Vielzahl von Anwendungsfällen keine ausreichende Funkabdeckung zu erwarten.

Ist nun ein direkter Funkanschluss von mobilen Teilnehmerendgeräten wie beispielsweise Laptop, PDA etc. gewünscht, so ist die freie Beweglichkeit dieser Teilnehmerendgeräte aufgrund der geschilderten Probleme stark eingeschränkt. Auch wäre für innerhalb von Gebäuden angeordnete ortsfeste Teilnehmerendgeräte eine gute Erreichbarkeit ohne umfangreiche Verkabelung wünschenswert.

Zur einfachen und flexiblen Vernetzung von Teilnehmerendgeräten in Gebäuden oder in einer benachbarten Umgebung im Bereich von einigen 100 m - so genannten "Hot Spots" - sind gemäß der Wireless Local Area Network (WLAN) Technologie realisierte Funknetzwerke bekannt, deren technische Realisierung gemäß dem 802.11 Standard erfolgt.

Die deutsche Patentanmeldung 10 2004 047 019.7 schlägt hierzu Lösungen vor, mit denen die erhöhte Übertragungsreichweite des drahtlosen DSL Accessnetzes und die bereits weit verbreitete WLAN-Technologie miteinander kombiniert werden können. Das dort vorgeschlagene Konvertermodul weist dabei eine erste Schnittstelleneinheit auf, die mit zumindest einem drahtlosen DSL Accessnetz über eine gemäß dem 802.16 Standard realisierte erste Luftschnittstelle verbindbar ist. Ferner weist das Konvertermodul eine zweite Schnittstelleneinheit auf, die mit zumindest einem Teilnehmerendgerät über eine gemäß dem 802.11 Standard realisierte zweite Luftschnittstelle verbindbar ist. Zur Umsetzung von gemäß dem 802.16 Standard übertragenen ersten Datensignalen in gemäß den 802.11 Standard übertragenen zweiten Datensignale und vice versa ist innerhalb des Konvertermoduls eine mit der ersten und zweiten Schnittstelleneinheit verbundene Konvertiereinheit vorgesehen. Vorteilhafterweise wird durch die erfindungsgemäße Kombination der Vorteile der WLAN Technologie und der drahtlosen DSL Technologie die Übertragungsreichweite für eine Wireless DSL-Anbindung zwischen einem drahtlosen DSL Accessnetz und zumindest einem Teilnehmerendgerät auf kostengünstige Weise deutlich erhöht. Darüber hinaus wird die nomadische Beweglichkeit von mobilen Endgeräten innerhalb von Gebäuden auch dann gewährleistet, wenn die eine gemäß dem 802.16 Standard realisierte Luftschnittstelle auf beiden Basisstationen stark abgeschattet ist, weil die mobilen Endgeräte ja nicht direkt mit der 802.16 Luftschnittstelle, sondern über die 802.11 Luftschnittstelle im WLAN kommunizieren. Zusätzlich ist der Konverter beispielsweise auch einfach an Straßenlaternen zu montieren, um so auf einfache Weise weitere "Hot Spots" zu erschließen oder die in der Nähe einer derartigen Straßenlaterne liegende Nachbarschaft mit einem DSL ähnlichen Service zu versorgen. Ferner ermöglicht die Umsetzung des 802.16 Standards auf den 802.11 Standard die Bereitstellungskosten eines drahtlosen DSL-Anschlusses mit mehreren WLAN-Teilnehmern, beispielsweise in der Funkübertragungsreichweite eines installierten Konvertermoduls befindlichen Teilnehmern, zu teilen.

Die Grundidee einer Kopplung von 802.11-Netzen mit einer 802.16-Übertragung zeigt auch Mecklenbräuker in "UMTS, WLAN und WiMAX - Zwei gegen einen?" (http://userver.ftw.at/telekomtag05/UMTS-WLAN-WIMAX.pdf), jedoch ohne auf die Problematik der Konvertierung explizit zu erwähnen oder gar darauf näher einzugehen.

WO 2004/025928 A2 offenbart einen Konverter, der über UMTS gelieferte CDMA-Daten in Daten für ein schnurloses Telefonsystem, z.B. mit DECT-Technik, umsetzt. Die dabei verwendeten Techniken und Technologien (kanalorientierte Telefontechnik) unterscheiden sich jedoch grundlegend von der paket-orientierten shared-medium basierten WiMAX/WLAN-Technik.

Nachteilig ist es dabei, dass durch die Teilung der zu überwindenden Telekommunikationsstrecke in zwei von verschiedenen Standards bediente Abschnitte die durchgängige Last- und Zugangskontrolle und damit auch eine durchgängige Bereitstellung von zugesicherter Bandbreite (Quality of Service - QoS) verloren geht. Dies ist insofern problematisch, da die beiden Abschnitte bezüglich der physikalischen Übertragungsbedingungen und der Art und Nutzung sehr verschieden sind. So weisen sie beispielsweise sehr unterschiedliche maximale Durchsatzraten auf. Rückschlüsse von Störungen, Engpässen oder auch reibungslosem Betrieb von einem Abschnitt auf den anderen sind daher in der Regel nicht möglich und wären auch nicht zulässig. So ist etwa die Ausbreitung der Funkwellen im WLAN - vor allem auf den letzten Metern - durch Reflexionen und Brechungen geprägt, also durch echte Mehrwegeausbreitungen mit deren unvermeidbaren Interferenzen. Eine nomadische Beweglichkeit des Nutzer soll dabei aber möglich sein. Zugleich bieten einige WLAN-Standards (802.11g) sehr hohe maximale Kapazitäten von bis zu 108 MBit/s, die allerdings auf alle Nutzer zu verteilen sind. Weiterhin nachteilig wirkt sich hier aus, dass die Frequenzen nicht lizensiert sind, so dass unkontrollierbare Störungen durch Frequenzüberlappungen auftreten können. Im Gegensatz dazu ist die WiMAX-Strecke (802.16) nur wenigen oder sogar keinerlei Änderungen unterworfen - vor allem, wenn eine direkte Sichtverbindung zwischen Sender und Empfänger besteht. Dafür ist die maximale Bandbreite pro Kanal aber oft geringer - aktuell beispielsweise etwa 14 MBit/s. Grundsätzlich sind jedoch auch hier grössere Übertragungsraten über eine Bündelung der Kanäle möglich.

Ferner offenbart US 6,584,080 ein Netz, in dem eine Vielzahl von Endstellen über Repeater an eine Host Radio Station gekoppelt werden. Die Repeater überwachen das Netz, indem sie eine Vielzahl von Überwachungspaketen untereinander und mit den Endstellen austauschen, um ggf. auf Ersatzwege umschalten zu können. Dies kostet Übertragungskapazität und Leistung in den Repeatern.

Der vorliegenden Erfindung liegt daher die Aufgabe zugrunde, eine Konvertereinheit und ein Verfahren zum Betreiben eines Telekommunikationsnetzwerkes anzugeben, mit denen es möglich ist, derartige mit unterschiedlichen Standards betriebene Abschnitte effizienter und sicherer nutzen und überwachen zu können.

Bezüglich der eingangs genannten Konvertereinheit wird dies erfindungsgemäss dadurch gelöst, dass eine Konvertereinheit zum Einsatz in drahtlosen Accessnetzen, insbesondere drahtlosen Digital Subscriber Line (DSL) Accessnetzen, vorgesehen ist, wobei die folgenden Komponenten umfasst sind:
a) eine erste Schnittstelleneinheit, die mit zumindest einem drahtlosen Accessnetz über eine gemäß einem ersten Standard (z.B. 802.16 Standard) realisierte erste Luftschnittstelle zur Realisierung einer ersten Funkverbindung verbindbar ist;
b) eine zweite Schnittstelleneinheit, die mit zumindest einem Teilnehmerendgerät über eine gemäß dem ersten Standard oder gemäss einem zweiten Standard (z.B. 802.11 Standard) realisierte zweite Luftschnittstelle zur Realisierung einer zweiten Funkverbindung verbindbar ist;
c) eine mit der ersten und zweiten Schnittstelleneinheit verbundene Konvertierungseinheit zur Umsetzung von gemäß dem ersten Standard (z.B. 802.16 oder 802.11) übertragenen ersten Datensignalen und von gemäß dem ersten oder dem zweiten Standard übertragenen zweiten Datensignalen und vice versa;
d) ein Kontrollmodul, welches die Eigenschaften und/oder die Verfügbarkeit der über die beiden Schnittstelleneinheiten eingerichteten Funkverbindungen diagnostiziert und diesbezügliche Kontrolldaten zur Steuerung der über die Funkverbindungen abgewickelten Kommunikation erstellt und an zumindest eine Kontrollinstanz einer angeschlossenen Funkverbindung sendet.

Auf diese Weise wird es möglich, dass die beiden Abschnitte nun mehr Informationen über den jeweiligen anderen Abschnitt besitzen, die zur Steuerung der Kommunikation verwendet werden können. Beispielsweise kann hiermit das Problem beherrscht werden, dass in einem der Abschnitte eine Störung auftritt, z.B. im WLAN-Netz aufgrund der gleichzeitigen Nutzung einer Funkfrequenz durch einen weiteren Nutzer. Nutzt der eigentliche Nutzer nun aber einen hochbitratigen Service, wie zum Beispiel Echtzeit-Videostreaming, kann dieser Service teilweise oder ganz gestört werden. Aufgrund der erzeugten Kontrolldaten ist der jeweils andere Abschnitt nun in der Lage, beispielsweise das aufgrund der Störung im anderen Abschnitt nutzlose Heranschaffen der Datensignale solange einzustellen, bis die Störung auf dem anderen Abschnitt beseitigt ist.

In vorteilhafter Ausgestaltung der Erfindung kann das Kontrollmodul die Kontrolldaten an eine Kontrollinstanz der über die erste Schnittstelleneinheit (SS1) eingerichteten Funkverbindung und/oder an eine Kontrollinstanz der über die zweite Schnittstelleneinheit (SS2) eingerichteten Funkverbindung senden. Auf diese Weise wird es erreicht, dass die beiden Kontrollinstanzen nun gegenseitig über den Zustand der jeweils anderen "Leitung" Bescheid wissen und den auf ihnen für einen bestimmten Benutzer abgewickelten Verkehr entsprechend einstellen, indem zum Beispiel die Bitrate abgesenkt oder die Verbindung ganz eingestellt wird. Bei einer Störung der WiMAX-Strecke kann zum Beispiel die Verbindung zwischen WiMAX CPE und dem WLAN Access Point abgeschaltet werden, so dass die angeschlossenen Endgeräte die Strecke als nicht mehr verfügbar erkennen. Ggfs. können dann alternative Verkehrspfade genutzt werden. Nach dem vorstehenden Wirkprinzip sind natürlich nicht nur 1:1-Konverter, also z.B. je eine Instanz 802.11 und eine Instanz 802.16, möglich, sondern grundsätzlich sind die Konverter auch in einer beliebigen Matrix als MxN-dimensionaler Konverter ausgestaltbar. Weiter können zum Beispiel auch die beiden Kontrollinstanzen auf indirekte Weise miteinander kommunizieren. So können zum Beispiel Routing-Nachrichten der L3-Layers ausgefiltert, d.h. nicht mehr übertragen und damit auch nicht beantwortet, sodass die Gegenseite die Strecke damit als ausgefallen betrachten und ggfs. den Service einstellen wird.

Um die Eigenschaften und/oder Verfügbarkeit der beiden Abschnitte besser bestimmen zu können, kann in vorteilhafter Weiterbildung der Erfindung die vom Kontrollmodul durchgeführte Diagnose Messungen zum Datendurchsatz und/oder zum Signal-zu-Rauschverhältnis und/oder zu Fehlerraten umfassen. Die Auswertung dieser Ergebnis kann bei entsprechender Ausgestaltung des Konverters zum Beispiel auch direkt im Konverter vorgenommen werden. Hierzu können im Konverter entsprechende Regeln und/oder Grenzwert für Kriterien zur Interpretation der Messungen hinterlegt sein. Möglich sind hierbei auch eine Kommunikation mit den Endgeräten und/oder den Kontrollinstanzen, wie WLAN Access Point und/oder WiMAX-Kontrollinstanz (Basisstation), und eine Interpretation der von den Endgeräten und/oder den Kontrollinstanzen stammenden Daten in der Konvertereinheit. Diese Interpretation wiederum kann an den Endbenutzer bzw. die Kontrollinstanzen weitergegeben werden, um dort entsprechende Massnahmen zu ermöglichen, wie zum Beispiel den Wechsel der Funkfrequenz auf der WLAN-Strecke oder das Ausweichen auf eine andere Datenübertragungsstrecke, wie UMTS, GSM oder dergleichen.

Mit Bezug auf die voranstehenden Bemerkungen ist es daher vorteilhaft, wenn das Kontrollmodul in Abhängigkeit von den diagnostizierten Eigenschaften und/oder der Verfügbarkeit Entscheidungen über die über die Funkverbindungen abgewickelte Kommunikation vornehmen kann. Hierbei wird dann besonders positiv ausgenutzt, dass der Konverter als erste zentrale Instanz Zugriff auf die Endnutzer am WLAN, aber auch der zentrale Punkt für den Zugriff auf die WiMAX-Strecke ist. Dementsprechend ist es dann sinnvoll, dass die vom Konverter getroffenen Entscheidungen eine Qualität haben, die zu einer angemessenen und effizienten Ende-zu-Ende-Kontrolle von Verkehr, Last und Zugang führen. Derartige Entscheidungen können daher einen oder mehrere der nachfolgenden Parameter umfassen:
a) Zulassen eines Teilnehmers zur Nutzung der Funkverbindung über die erste und/oder zweite Schnittstelleneinheit (SS1, SS2) in Abhängigkeit von für den Teilnehmer definierten Eigenschaften;
b) Zulassen eines Dienstes zur Nutzung der Funkverbindung über die erste und/oder die zweite Schnittstelleneinheit (SS1, SS2) in Abhängigkeit von für den Teilnehmer und/oder den Dienst definierten Eigenschaften; und
c) Einstellung einer für den Teilnehmer und/oder den Dienst zulässigen Bandbreite der über die Funkverbindungen abgewickelten Kommunikation.

Bezüglich des eingangs erwähnten Verfahrens wird hinsichtlich der erfindungsgemässen Lösung und ihrer vorteilhaften Ausgestaltungen auf die zu der Konvertereinheit deckungsgleich ausgebildeten Verfahrensmerkmale nach den Patentansprüchen 5 bis 8 verwiesen. Weiter wird erfindungsgemäss ein Telekommunikationsnetzwerk gemass Anspruch 9 beansprucht, das mit der vorstehend erläuterten Konvertereinheit ausgerüstet ist.

Die Erfindung wird nachfolgend anhand der Zeichnung beispielsweise näher erläutert. Dabei zeigen:
- Figur 1: beispielhaft ein drahtloses DSL-Accessnetz;
- Figur 2: beispielhaft den schematischen Aufbau eines erfindungsgemäßen Konvertermoduls.

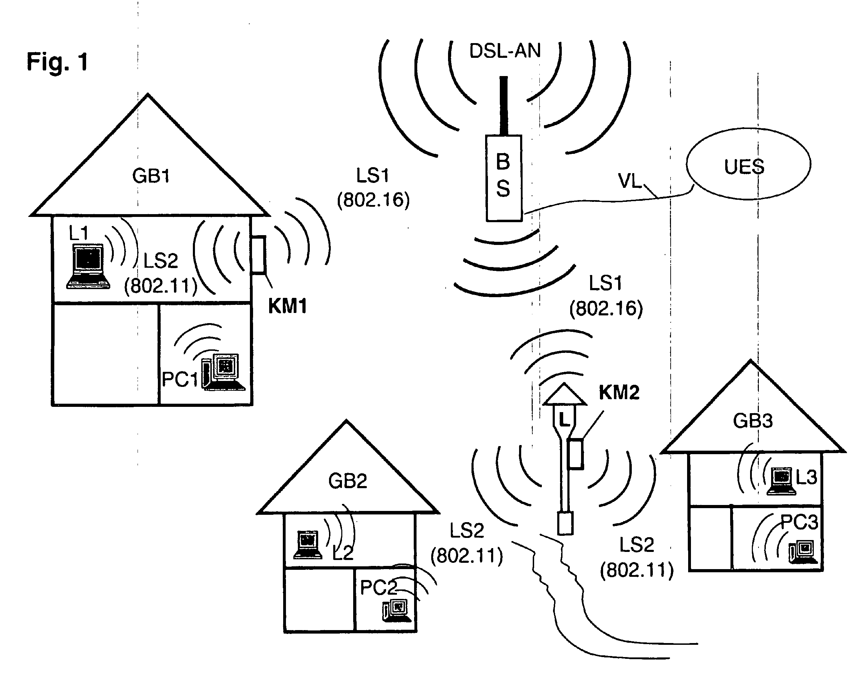

Figur 1 zeigt ein drahtloses Digital Subscriber Line (DSL) Accessnetz DSL-AN, umfassend zumindest eine Basisstation BS zur Bereitstellung einer gemäß dem 802.16 Standard realisierten ersten Luftschnittstelle LS1. Die Basisstation BS des DSL Accessnetzes DSL-AN ist beispielsweise über Verbindungsleitungen VL an zumindest ein weiteres Übertragungssystem UES angeschlossen.

Ferner zeigt Figur 1 beispielhaft ein erstes, zweites und drittes Gebäude GB1, GB2, GB3, die in Übertragungsreichweite der gemäß dem 802.16 Standard realisierten ersten Luftschnittstelle LS1 angeordnet sind. Die Übertragungsreichweite umfasst hierbei einen Umkreis von kleiner 10 km gemessen von der Basisstation BS. Somit wäre zwar theoretisch eine direkte Datenübertragung gemäß dem in der Beschreibungseinleitung geschilderten Stand der Technik über die erste Luftschnittstelle LS1 an beispielsweise mobile, innerhalb der Übertragungsreichweite der ersten Luftschnittstelle LS1 befindlichen Teilnehmerendgeräte wie Laptops oder PDA's möglich. Hierbei ergeben sich allerdings die geschilderten Nachteile der eingeschränkten Beweglichkeit der mobilen Teilnehmerendgeräte, weil natürlich besonders im Haus in der Regel die direkte Sichtverbindung zur 802.16 Basisstation fehlt. Weiter ist es nachteilig, dass die für den Funkbetrieb erforderlichen Funkschnittstelleneinheiten gegenüber WLAN kostenintensiver sind.

Um diese Nachteile zu überwinden sind beispielsweise an der Außenwand des ersten Gebäudes GB1 bzw. im "Wireless Hot Spot" Bereich an einer Straßenlaterne L ein erstes bzw. zweites Konvertermodul KM1, KM2 angeordnet, wobei sich das zweite und dritte Gebäude GB2, GB3 im "Hot Spot"-Übertragungs-reichweitenbereich des zweiten Konvertermoduls KM2 befinden. Die "Hot Spot" Übertragungsreichweite wird durch den 802.11 (WLAN) Standard vorgegeben und umfasst einen Funkradius von mehreren 100 m. Im dargestellten Ausführungsbeispiel ist das erste Konvertermodul KM1 unmittelbar an der Außenwand des Gebäudes befestigt. Alternativ hierzu könnte das erste Konvertermodul KM1 ebenso in einem Innenraum des ersten Gebäudes aufgestellt werden, wobei hierzu eine Fensterantenne zur Sicherung einer optimalen Empfangleistung vorteilhaft wäre.

In den Innenräumen des ersten, zweiten und dritten Gebäudes GB1, GB2, GB3 befinden sich lokale bzw. mobile Teilnehmerendgeräte PC1 bis PC3, L1 bis L3, die über eine gemäß dem 802.11 (WLAN) Standard realisierte zweite Funkschnittstelle LS2 mit dem ersten bzw. zweiten Konvertermodul KM1, KM2 verbunden sind. Das erste Gebäude weist ein erstes lokales Teilnehmerendgerät PC1 und ein erstes mobiles Teilnehmerendgerät L1 auf. Analog hierzu weisen das zweite bzw. dritte Gebäude GB2, GB3 jeweils ein zweites bzw. dritten lokales Teilnehmerendgerät PC2, PC3 sowie ein zweites bzw. dritten mobiles Teilnehmerendgerät L2, L3 auf. Die dargestellte Konfiguration der Teilnehmerendgeräte ist beispielhaft gewählt und kann von Anwendungsfall zu Anwendungsfall unterschiedlich ausgestaltet sein.

Ferner ist die Basisstation BS des drahtlosen DSL Accessnetzes DSL-AN über die gemäß dem 802.16 Standard realisierte erste Luftschnittstelle LS1 mit dem ersten und zweiten Konvertermodul KM1, KM2 verbunden.

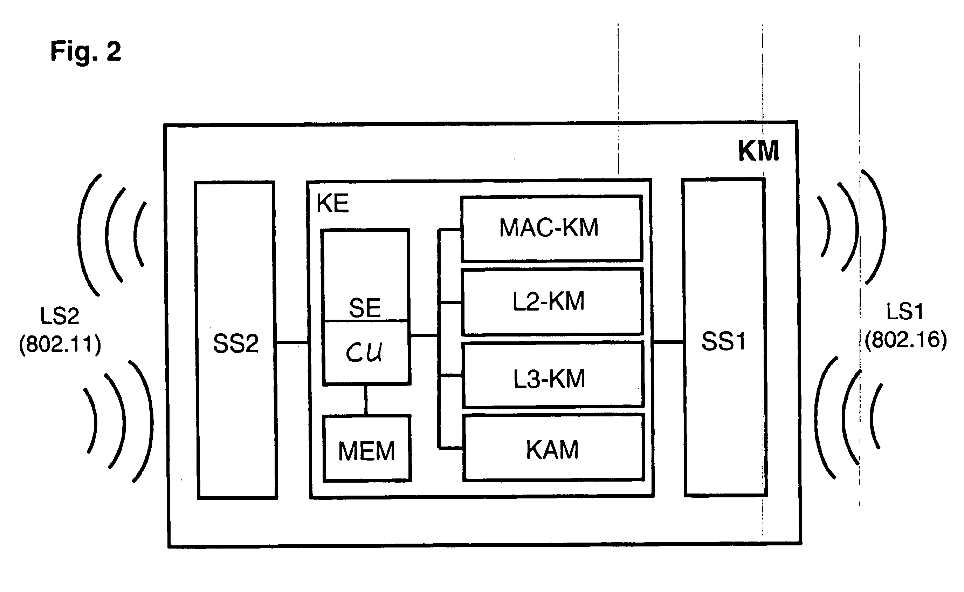

In Figur 2 ist in einem schematischen Blockschaltbild der prinzipielle Aufbau eines erfindungsgemäßen Konvertermoduls KM beispielhaft dargestellt, anhand dem das Verfahren zur Übertragung von ersten und zweiten Datensignalen zwischen dem drahtlosen DSL Accessnetz DSL-AN und zumindest einem Teilnehmerendgerät PC1 bis PC3, L1 bis L3 über die gemäß dem 802.16 Standard realisierte erste Luftschnittstelle LS1 und die in einem Kontrollmodul CU durchgeführte Diagnose der Eigenschaften und/oder der Verfügbarkeit der Luftschnittstellen LS1 und LS2 näher erläutert werden soll. Das Konvertermodul weist insbesondere eine erste und zweite Schnittstelleneinheit SS1, SS2 auf, die über eine Konvertierungseinheit KE miteinander verbunden sind.

Hierbei ist die erste Schnittstelleneinheit SS1 mit zumindest dem einen drahtlosen DSL Accessnetz DSL-AN über die gemäß dem 802.16 Standard realisierte erste Luftschnittstelle LS1 und die zweite Schnittstelleneinheit SS2 mit zumindest einem der Teilnehmerendgeräte PC1 bis PC3, L1 bis L3 über die gemäß dem 802.11 Standard realisierte zweite Luftschnittstelle LS2 verbindbar.

Ferner weist die Konvertierungseinheit KE eine Steuereinheit SE sowie ein an diese angeschlossene Speichereinheit MEM auf. Zur Realisierung der Umsetzung von gemäß dem 802.16 Standard übertragenen ersten Datensignalen in gemäß dem 802.11 Standard übertragenen zweiten Datensignalen und vice versa sind unterschiedliche Konvertierungsmodule x-KM in der Konvertiereinheit KE vorgesehen, die jeweils mit der Steuereinheit SE verbunden sind. So weist im dargestellten Ausführungsbeispiel die Konvertiereinheit KE ein Media Access Control (MAC) Konvertierungsmodul MAC-KM, ein Layer-2-Konvertierungsmodul L2-KM und ein Layer-3-Konvertierungsmodul L3-KM auf, die wahlweise durch die Steuereinheit SE zur Umsetzung der ersten und zweiten Datensignale Verwendung finden. Zusätzlich ist eine Kanalauswahleinheit KAM zur Auswahl der für die Übertragung der ersten und zweiten Datensignale verwendeten Frequenzkanäle an die Steuereinheit SE der Konvertiereinheit KE angeschlossen.

In der Basisstation BS des drahtlosen DSL Accessnetzes DSL-AN werden zunächst das durch den 802.16 Standard festgelegte Übertragungsformat aufweisende erste Datensignale erzeugt und über die erste Luftschnittstelle LS1 gesendet. Die gesendeten ersten Datensignale werden in dem Konvertermodul KM über die erste Schnittstelleneinheit SS1 empfangen und über die Konvertiereinheit KE in das für die Übertragung gemäß dem 802.11 Standard erforderliche Übertragungsformat umgesetzt. Die umgesetzten ersten Datensignale werden über die zweite Schnittstelleneinheit SS2 und somit über die gemäß dem 802.11 Standard realisierte zweite Luftschnittstelle LS2 von dem Konvertermodul KM an zumindest ein Teilnehmerendgerät PC1 bis PC3, L1 bis L3 in "downstream" Richtung übertragen.

Zur Umsetzung der Datensignale in "upstream" Richtung werden die vom zumindest einem Teilnehmerendgerät PC1 bis PC3, L1 bis L3 über die zweite Luftschnittstelle gesendete zweiten Datensignale über die zweite Schnittstelleneinheit SS2 in dem Konvertermodul KM empfangen und über die Konvertiereinheit KE in das durch den 802.16 Standard vorgegebene Übertragungsformat umgesetzt. Die umgesetzten zweiten Datensignale werden anschließend über die erste Schnittstelleneinheit SS1 des Konvertermoduls KM über die erste Luftschnittstelle LS1 von dem Konvertermodul KM an die Basisstation BS des zumindest einen drahtlosen DSL Accessnetzes DSL-AN übertragen.

Die Umsetzung der ersten Datensignale erfolgt über eines der in der Konvertiereinheit KE vorgesehen Konvertierungsmodule x-KM. Beispielsweise können die empfangenen ersten Datensignale über das MAC-Konvertierungsmodul MAC-KM umgesetzt werden, welches in Datenaustausch mit der Steuereinheit SE steht und bei dem die Umsetzung in "downstream" Richtung über die Media Access Control (MAC) Schicht des 802.11 Standards und in "Upstream" Richtung über die Media Access Control (MAC) Schicht des 802.16 Standards erfolgt. Die Media Access Control Layers (MAC) Schichten des 802.16 Standards und des 802.11 Standards werden somit unmittelbar über einen Mediation-Layer angepasst.

Alternativ hierzu kann die Umsetzung über das Layer-2-Konvertierungsmodul L2-KM erfolgen, bei dem die ersten und zweiten Datensignale über die jeweils zweite Übertragungsschicht des ISO/OSI Schichtenmodells umgesetzt werden.

Das Kontrollmodul CU hat nun im Zusammenwirken mit der Steuereinheit SE die Funktion, die Eigenschaften und die Verfügbarkeit der beiden Luftschnittstellen LS1 und LS2 zu diagnostizieren. Hierzu führt die Kontrolleinheit Messungen zum Datendurchsatz, zum Signal-zu-Rauschverhältnis und zu Fehlerraten durch. Anhand der im Kontrollmodul CU abgelegten Regeln werden diese Messungen sofort an dieser zentralen Stelle ausgewertet und interpretiert. Beispielhaft sei hierfür die Hemmung einer hochbitratigen Übertragung auf der WLAN-Strecke über die Luftschnittstelle LS2 genannt, weil ein anderer Benutzer beispielsweise auf derselben Frequenz funkt. Das Kontrollmodul CU erkennt diese Situation aufgrund der gestiegenen Fehlerrate und markiert daher diese Strecke als nicht mehr verfügbar. Zugleich werden entsprechende Kontrolldaten an die Kontrollinstanz der 802.16 Luftschnittstelle LS1 übergeben, die ihrerseits nun die Übertragung der Daten einstellt und so wieder Bandbreite für Übertragungen zuweisen kann, die auch auf der 802.11 Luftschnittstelle LS2 einem anderen Benutzer zugänglich gemacht werden können. Zugleich kann das Kontrollmodul CU auch Kontrolldaten an das Endgerät, z.B. den Laptop L2, der Benutzer ausgeben und dem Benutzer empfehlen für die Übertragung auf der 802.11 Strecke auf eine andere Frequenz zu wechseln, was dann der 802.11 Router beim Benutzer entsprechend auch automatisch im Wege einer automatischen Kanalselektion umsetzen kann.

Auf der anderen Seite kann mittels des Kontrollmoduls CU auch eine Störung oder eine Überlastung der WiMAX-Strecke (Luftschnittstelle LS1) detektiert werden. Das Kontrollmodul CU schaltet dann die Verbindung über die erste Luftschnittstelle LS1 ab, so dass die angeschlossenen Geräte die Strecke als nicht mehr verfügbar erkennen. Alternativ kann das Kontrollmodul CU auch das Unterdrücken ("Ausfiltern) von Routing-Nachrichten zwischen den WiMAX CPE (Customer Premises Equipment oder auch Subscriber Terminal) und WLAN AP (Access Point) KM1, KM2 anordnen, d.h. dass die angeschlossenen Geräte den Pfad als nicht mehr verfügbar erkennen, eine Kommunikation aber weiterhin möglich wäre. Alternativ oder ergänzend kann das Kontrollmodul CU auch eine Kommunikation zwischen den WiMAX CPE und dem WLAN Access point etablieren und weitergehende Massnahmen einleiten. Derartige Massnahmen können von dienstabhängigen Einschränkungen, wie z.B. reduziertem Datendurchsatz auf der Teilnehmerseite, bis zur vollständigen Sperre des Dienstes für diesen Teilnehmer reichen. Andererseits kann auch ein Wechsel der Frequenz eingeleitet werden, um die Störung auf der WiMAX-Strecke zu beheben.

Das Kontrollmodul CU umfasst ausserdem die Fähigkeiten Endbenutzer oder Dienste zur Nutzung der WLAN-Strecke (LS2) zuzulassen oder davon auszuschliessen. Diese Entscheidungen macht das Kontrollmodul CU davon abhängig, wie beispielsweise die Auslastung der WiMAX-Strecke (LS1) durch die im Kontrollmodul CU gewonnenen Erkenntnisse aufgrund der Messungen zu beurteilen ist. Wird von einem bestimmten Benutzer beispielsweise ein hochbitratiger Dienst angefordert, der zur Überlastung der "langsameren" WiMAX-Strecke führen würde, lässt das Kontrollmodul den Dienst bzw. den Endbenutzer im WLAN zu oder lehnt ihn ab, und zwar vorzugsweise in Abhängigkeit von dort abgelegten Regeln. Hat der Endbenutzer beispielsweise eine hohe Nutzerklasse, d.h. er ist bereit für einen gewissen Grad an QoS auch entsprechend mehr Geld pro Daten zu bezahlen, kann der Dienst trotz einer sich abzeichnenden Überlastung zugelassen werden. Ein anderer Dienst eines Benutzers mit niedrigerer Nutzerklasse könnte beispielsweise dann zum Ausbalancieren der Last entsprechend in der Folge mit einer niedrigeren Bitrate übertragen werden, womit das Kontrollmodul CU auch ein Regelwerk zur Beurteilung von eben solchen Verdrängungsmöglichkeiten umfasst. Weiter setzt das Kontrollmodul CU mit seinen Kontrolldaten auch solche für den Endbenutzer direkt bestimmte Meldungen ab, um dem Endbenutzer eine Reaktion darauf zu ermöglichen.

Auf diese Weise kann das mit dem Kontrollmodul CU ausgestattete Konvertermodul KM eine Verkehrs-, Last- und Zugangskontrolle auf Ende-zu-Ende-Basis vornehmen. Ein "Verstopfen" der WiMAX-Strecke wird durch die Messungen und die daraus abgeleiteten Entscheidungen nach dem Verursacherprinzip nahe an der Quelle vermieden. Dies ist beispielsweise dann sinnvoll, wenn dem Endbenutzer gar kein Vorteil aus dem Senden der angeforderten Daten über die WiMAX-Strecke erwachsen würde, weil das WLAN aufgrund einer Störung oder Überlastung den Engpass für den betroffenen Endbenutzer darstellt. Umgekehrt erkennt das Konvertermodul KM auch Störungen auf der WiMAX-Strecke und kann entsprechend den hinterlegten Regeln Ausweichmöglichkeiten eröffnen und weitere Massnahmen ermöglichen.

Das beschriebene Konvertermodul KM sowie das beschriebene Verfahren sind keinesfalls auf bestimmte drahtlose DSL-Acessnetze DSL-AN beschränkt, sondern können in beliebigen xDSL-Acessnetzen eingesetzt werden.

## Patentansprüche

1. Konvertereinheit (KM) zum Einsatz in drahtlosen Digital Subscriber Line (DSL) Accessnetzen, umfassend
a) eine erste Schnittstelleneinheit (SS1), gestaltet zur Verbindung mit zumindest einem drahtlosen Accessnetz (DSL-AN) über eine dem IEEE 802.16 Standard entsprechend realisierte erste Luftschnittstelle (LS1) zur Realisierung einer ersten Funkverbindung;
b) eine zweite Schnittstelleneinheit (SS2), gestaltet zur Verbindung mit zumindest einem Teilnehmerendgerät (PC1 - PC3, L1 - L3) über eine dem IEEE 802.16 Standard oder über eine den IEEE 802.11 standard entsprechend realisierte zweite Luftschnittstelle (LS2) zur Realisierung einer zweiten Funkverbindung
c) eine mit der ersten und zweiten Schnittstelleneinheit (SS1, SS2) verbundene Konvertierungseinheit (KE) zur Umsetzung von gemäß IEEE 802.16 Standard übertragenen ersten Datensignalen und von gemäß IEEE 802.16 Standard oder 802.11 Standard übertragenen zweiten Datensignalen und vice versa;
weiter **gekennzeichnet durch**
d) ein Kontrollmodul (CU), welches die Eigenschaften und/oder die Verfügbarkeit der über die beiden Schnittstelleneinheiten (SS1, SS2) eingerichteten Funkverbindungen diagnostiziert und diesbezügliche Kontrolldaten zur Steuerung der über die Funkverbindungen abgewickelten Kommunikation erstellt, wobei das Kontrollmodul (CU) die Kontrolldaten an eine Kontrollinstanz der über die erste Schnittstelleneinheit (SS1) eingerichteten Funkverbindung und/oder an eine Kontrollinstanz der über die zweite Schnittstelleneinheit (SS2) eingerichteten Funkverbindung sendet.

2. Konvertereinheit (KM) nach Anspruch 1,
**dadurch gekennzeichnet, dass**
die vom Kontrollmodul (CU) durchgeführte Diagnose Messungen zum Datendurchsatz und/oder zum Signal-zu-Rauschverhältnis und/oder zu Fehlerraten umfasst.

3. Konvertereinheit (KM) nach Anspruch 1 oder 2,
**dadurch gekennzeichnet, dass**
das Kontrollmodul (CU) in Abhängigkeit von den diagnostizierten Eigenschaften und/oder der Verfügbarkeit Entscheidungen über die über die Funkverbindungen abgewickelte Kommunikation vornimmt.

4. Konvertereinheit (KM) nach Anspruch 3,
**dadurch gekennzeichnet, dass**
diese Entscheidungen einen oder mehrere der nachfolgenden Parameter umfassen:
a) Zulassen eines Teilnehmers zur Nutzung der Funkverbindung über die erste und/oder zweite Schnittstelleneinheit (SS1, SS2) in Abhängigkeit von für den Teilnehmer definierten Eigenschaften;
b) Zulassen eines Dienstes zur Nutzung der Funkverbindung über die erste und/oder die zweite Schnittstelleneinheit (SS1, SS2) in Abhängigkeit von für den Teilnehmer und/oder den Dienst definierten Eigenschaften; und
c) Einstellung einer für den Teilnehmer und/oder den Dienst zulässigen Bandbreite der über die Funkverbindungen abgewickelten Kommunikation.

5. Verfahren zum Steuern der Kommunikation in drahtlosen Accessnetzen, insbesondere in drahtlosen Digital Subscriber Line (DSL) Accessnetzen, umfassend die Schritte
a) Bereitstellen einer ersten Schnittstelleneinheit (SS1), die mit zumindest einem drahtlosen Accessnetz (DSL-AN) über eine gemäß IEEE 802.16 Standard realisierte erste Luftschnittstelle (LS1) zur Realisierung einer ersten Funkverbindung verbunden ist;
b) Bereitstellen einer zweiten Schnittstelleneinheit (SS2), die mit zumindest einem Teilnehmerendgerät (PC1 - PC3, L1 - L3) über eine gemäß IEEE 802.16 Standard oder gemäss IEEE 802.11 Standard realisierte zweite Luftschnittstelle (LS2) zur Realisierung einer zweiten Funkverbindung verbunden ist;
c) Bereitstellen einer mit der ersten und zweiten Schnittstelleneinheit (SS1, SS2) verbundenen Konvertierungseinheit (KE) zur Umsetzung von gemäß dem IEEE 802.16 Standard übertragenen ersten Datensignalen und von gemäß IEEE 802.16 Standard oder gemäss IEEE 802.11 Standard übertragenen zweiten Datensignalen und vice versa;
und weiter **gekennzeichnet durch**
d) das Bereitstellen eines Kontrollmoduls (CU), welches die Eigenschaften und/oder die Verfügbarkeit der über die beiden Schnittstelleneinheiten (SS1, SS2) eingerichteten Funkverbindungen diagnostiziert und diesbezügliche Kontrolldaten zur Steuerung der über die Funkverbindungen gesendeten ersten und/oder zweiten Datensignale erstellt, wobei die Kontrolldaten an eine Kontrollinstanz der über die erste Schnittstelleneinheit (SS1) eingerichteten Funkverbindung und/oder an eine Kontrollinstanz der über die zweite Schnittstelleneinheit (SS2) eingerichteten Funkverbindung gesendet werden.

6. Verfahren nach Anspruch 5,
**dadurch gekennzeichnet, dass**
vom Kontrollmodul durchgeführte Diagnose Messungen zum Datendurchsatz und/oder zum Signal-zu-Rauschverhältnis und/oder zu Fehlerraten umfasst sind.

7. Verfahren nach Anspruch 5 oder 6,
**dadurch gekennzeichnet, dass**
in Abhängigkeit von den diagnostizierten Eigenschaften und/oder der Verfügbarkeit Entscheidungen über die über die Funkverbindungen abgewickelte Kommunikation vorgenommen werden.

8. Verfahren nach Anspruch 7,
**dadurch gekennzeichnet, dass**
diese Entscheidungen einen oder mehrere der nachfolgenden Parameter umfassen:
a) Zulassen eines Teilnehmers zur Nutzung der Funkverbindung über die erste und/oder zweite Schnittstelleneinheit (SS1, SS2) in Abhängigkeit von für den Teilnehmer definierten Eigenschaften;
b) Zulassen eines Dienstes zur Nutzung der Funkverbindung über die erste und/oder die zweite Schnittstelleneinheit (SS1, SS2) in Abhängigkeit von für den Teilnehmer und/oder den Dienst definierten Eigenschaften; und
c) Einstellung einer für den Teilnehmer und/oder den Dienst zulässigen Bandbreite der über die Funkverbindungen abgewickelten Kommunikation.

9. Telekommunikationsnetzwerk, umfassend mindestens ein drahtlos angeschlossenes Teilnehmerendgerät und eine Konvertereinheit (KM) nach einem der Patentansprüche 1 bis 4.

## Claims

1. Converter unit (KM) for use in wireless Digital Subscriber Line (DSL) access networks, comprising:
a) a first interface unit (SS1) designed for connection to at least one wireless access network (DSL-AN) via a first air interface (LS1), implemented in accordance with the IEEE 802.16 Standard, for implementing a first radio link;
b) a second interface unit (SS2) designed for connection to at least one subscriber terminal (PC1 - PC3, L1 - L3) via a second air interface (LS2), implemented in accordance with the IEEE 802.16 Standard or in accordance with the IEEE 802.11 Standard, for implementing a second radio link;
c) a converting unit (KE) connected to the first and second interface unit (SS1, SS2) for converting first data signals transmitted in accordance with the IEEE 802.16 Standard and second data signals transmitted in accordance with the IEEE 802.16 Standard or 802.11 Standard and vice versa;
further **characterized by**
d) a control module (CU), which diagnoses the characteristics and/or the availability of the radio links set up via the two interface units (SS1, SS2), and which generates relevant control data for controlling the communication handled via the radio links, wherein the control module (CU) sends the control data to a control entity of the radio link set up via the first interface unit (SS1) and/or to a control entity of the radio link set up via the second interface unit (SS2).

2. Converter unit (KM) according to Claim 1, **characterized in that** the diagnosis performed by the control module (CU) comprises measurements relating to the data throughput and/or to the signal/noise ratio and/or to error rates.

3. Converter unit (KM) according to Claim 1 or 2, **characterized in that** the control module (CU) makes decisions about the communication handled via the radio links in dependence on the diagnosed characteristics and/or the availability.

4. Converter unit (KM) according to Claim 3, **characterized in that** these decisions comprise one or more of the following parameters:
a) permitting a subscriber to utilize the radio link via the first and/or the second interface unit (SS1, SS2) in dependence on characteristics defined for the subscriber;
b) permitting a service to utilize the radio link via the first and/or the second interface unit (SS1, SS2) in dependence on characteristics defined for the subscriber and/or the service; and
c) adjusting a bandwidth permissible for the subscriber and/or the service of the communication handled via the radio links.

5. Method for controlling the communication in wireless access networks, particularly in wireless Digital Subscriber Line (DSL) access networks, comprising the steps of
a) providing a first interface unit (SS1), which is connected to at least one wireless access network (DSL-AN) via a first air interface (LS1), implemented in accordance with the IEEE 802.16 Standard, for implementing a first radio link;
b) providing a second interface unit (SS2), which is connected to at least one subscriber terminal (PC1 - PC3, L1 - L3) via a second air interface (LS2), implemented in accordance with the IEEE 802.16 Standard or in accordance with the IEEE 802.11 Standard, for implementing a second radio link;
c) providing a converting unit (KE), connected to the first and second interface unit (SS1, SS2) for converting first data signals transmitted in accordance with the IEEE 802.16 Standard and second data signals transmitted in accordance with the IEEE 802.16 Standard or in accordance with the IEEE 802.11 Standard, and vice versa;
and further **characterized by**
d) providing a control module (CU), which diagnoses the characteristics and/or the availability of the radio links set up via the two interface units (SS1, SS2), and which generates relevant control data for controlling the first and/or second data signals sent via the radio links, wherein the control data are sent to a control entity of the radio link set up via the first interface unit (SS1) and/or to a control entity of the radio link set up by the second interface unit (SS2).

6. Method according to Claim 5, **characterized in that** the diagnosis performed by the control module comprises measurements relating to the data throughput and/or to the signal/noise ratio and/or to error rates.

7. Method according to Claim 5 or 6, **characterized in that** decisions about the communication handled via the radio links are made in dependence on the diagnosed characteristics and/or the availability.

8. Method according to Claim 7, **characterized in that** these decisions comprise one or more of the following parameters:
a) permitting a subscriber to utilize the radio link via the first and/or second interface unit (SS1, SS2) in dependence on characteristics defined for the subscriber;
b) permitting a service to utilize the radio link via the first and/or the second interface unit (SS1, SS2) in dependence on characteristics defined for the subscriber and/or the service; and
c) adjusting a bandwidth, permissible for the subscriber and/or the service, of the communication handled via the radio links.

9. Telecommunication network comprising at least one wireless connected subscriber terminal and one converter unit (KM) according to one of the claims 1 to 4.

## Revendications

1. Unité de conversion (KM) pour utilisation dans des réseaux d'accès Digital Subscriber Line (DSL) sans fil, comprenant:
a) une première unité d'interface (SS1), réalisée pour se connecter à au moins un réseau d'accès sans fil (DSL-AN) via une première interface aérienne (LS1) réalisée selon la norme IEEE 802.16 pour réaliser une première liaison radio;
b) une deuxième unité d'interface (SS2), réalisée pour se connecter à au moins un terminal d'abonné (PC1 - PC3, L1 - L3) via une deuxième interface aérienne (LS2) réalisée selon la norme IEEE 802.16 ou selon la norme IEEE 802.11 pour réaliser une deuxième liaison radio;
c) une unité de conversion (KE) connectée aux première et deuxième unités d'interface (SS1, SS2) pour convertir des premiers signaux de données transmis selon la norme IEEE 802.16 et des deuxièmes signaux de données transmis selon la norme IEEE 802.16 ou selon la norme 802.11, et vice versa;
laquelle est en outre **caractérisée par**:
d) un module de contrôle (CU) qui diagnostique les caractéristiques et/ou la disponibilité des liaisons radio établies via les deux unités d'interface (SS1, SS2) et établit des données de contrôle afférentes pour commander la communication effectuée via les liaisons radio, le module de contrôle (CU) envoyant les données de contrôle à une instance de contrôle de la liaison radio établie via la première unité d'interface (SS1) et/ou à une instance de contrôle de la liaison radio établie via la deuxième unité d'interface (SS2).

2. Unité de conversion (KM) selon la revendication 1, **caractérisée en ce que** le diagnostic effectué par le module de contrôle (CU) inclut des mesures relatives au débit de données et/ou au rapport signal/bruit et/ou à des taux d'erreurs.

3. Unité de conversion (KM) selon la revendication 1 ou 2, **caractérisée en ce que** le module de contrôle (CU) prend, en fonction des caractéristiques diagnostiquées et/ou de la disponibilité, des décisions relatives à la communication effectuée via les liaisons radio.

4. Unité de conversion (KM) selon la revendication 3, **caractérisée en ce que** ces décisions incluent un ou plusieurs des paramètres suivants:
a) autoriser un abonné à utiliser la liaison radio via la première et/ou la deuxième unité d'interface (SS1, SS2) en fonction de caractéristiques définies pour l'abonné;
b) autoriser un service à utiliser la liaison radio via la première et/ou la deuxième unité d'interface (SS1, SS2) en fonction de caractéristiques définies pour l'abonné et/ou le service; et
c) réglage d'une largeur de bande, autorisée pour l'abonné et/ou le service, de la communication effectuée via les liaisons radio.

5. Procédé pour commander la communication dans des réseaux d'accès sans fil, en particulier dans des réseaux d'accès Digital Subscriber Line (DSL) sans fil, comportant les étapes suivantes:
a) mise à disposition d'une première unité d'interface (SS1) qui est connectée à au moins un réseau d'accès sans fil (DSL-AN) via une première interface aérienne (LS1) réalisée selon la norme IEEE 802.16 pour réaliser une première liaison radio;
b) mise à disposition d'une deuxième unité d'interface (SS2) qui est connectée à au moins un terminal d'abonné (PC1 - PC3, L1 - L3) via une deuxième interface aérienne (LS2) réalisée selon la norme IEEE 802.16 ou selon la norme IEEE 802.11 pour réaliser une deuxième liaison radio;
c) mise à disposition d'une unité de conversion (KE) connectée aux première et deuxième unités d'interface (SS1, SS2) pour convertir des premiers signaux de données transmis selon la norme IEEE 802.16 et des deuxièmes signaux de données transmis selon la norme IEEE 802.16 ou selon la norme IEEE 802.11, et vice versa;
lequel est en outre **caractérisé par**:
d) la mise à disposition d'un module de contrôle (CU) qui diagnostique les caractéristiques et/ou la disponibilité des liaisons radio établies via les deux unités d'interface (SS1, SS2) et établit des données de contrôle afférentes pour commander les premiers et/ou les deuxièmes signaux de données émis via les liaisons radio, les données de contrôle étant envoyées à une instance de contrôle de la liaison radio établie via la première unité d'interface (SS1) et/ou à une instance de contrôle de la liaison radio établie via la deuxième unité d'interface (SS2).

6. Procédé selon la revendication 5, **caractérisé en ce que** le diagnostic effectué par le module de contrôle inclut des mesures relatives au débit de données et/ou au rapport signal/bruit et/ou à des taux d'erreurs.

7. Procédé selon la revendication 5 ou 6, **caractérisé en ce que** des décisions relatives à la communication effectuée via les liaisons radio sont prises en fonction des caractéristiques diagnostiquées et/ou de la disponibilité.

8. Procédé selon la revendication 7, **caractérisé en ce que** ces décisions incluent un ou plusieurs des paramètres suivants:
a) autoriser un abonné à utiliser la liaison radio via la première et/ou la deuxième unité d'interface (SS1, SS2) en fonction de caractéristiques définies pour l'abonné;
b) autoriser un service à utiliser la liaison radio via la première et/ou la deuxième unité d'interface (SS1, SS2) en fonction de caractéristiques définies pour l'abonné et/ou le service; et
c) réglage d'une largeur de bande, autorisée pour l'abonné et/ou le service, de la communication effectuée via les liaisons radio.

9. Réseau de télécommunications, comprenant au moins un terminal d'abonné connecté sans fil et une unité de conversion (KM) selon l'une des revendications 1 à 4.
